# EUROPÄISCHE PATENTSCHRIFT

(11) **EP 0 450 253 B1**
(45) Veröffentlichungstag und Bekanntmachung des Hinweises auf die Patenterteilung: **05.01.1994**
(21) Anmeldenummer: 90810268.4
(22) Anmeldetag: 03.04.1990
(51) Int. Cl.: A24F 47/00, A24B 15/16, A61C 15/02

(54) **Mittel zur Entwöhnung des Tabakgenusses**
Means for breaking the habitual use of tobacco
Moyen pour se désaccoutumer du tabac

(43) Veröffentlichungstag der Anmeldung: 09.10.1991
(73) Patentinhaber: Brändli, Paul, CH-8800 Thalwil (CH); Lanz, Peter, CH-8002 Zürich (CH)
(72) Erfinder: Brändli, Paul, CH-8800 Thalwil (CH); Lanz, Peter, CH-8002 Zürich (CH)
(74) Vertreter: Justitz-Wormser, Daisy P., Dipl.-Chem.

(56) Entgegenhaltungen:
- EP-A- 0 149 997
- EP-A- 0 202 512
- EP-A- 0 321 943
- CH-A- 673 764
- DE-A- 2 629 043
- FR-A- 2 354 720
- GB-A- 2 199 229
- US-A- 4 793 366

## Beschreibung

Die vorliegende Erfindung betrifft ein Mittel zum Ersatz und zum Abgewöhnen des Rauchens, sowie des Kauens oder Schnupfens von Tabak.

Die Wirkung des Nikotins auf den Menschen war schon seit vielen Jahren Gegenstand eingehender Untersuchungen. Innert weniger Sekunden, doppelt so schnell als Heroin, erreicht Nikotin aus inhaliertem Zigarettenrauch das menschliche Gehirn, wo es zuerst das Denkvermögen schärft, später aber ermüdend wirkt. Der Herzschlag wird erhöht, die Blutgefässe verengen sich und der Blutdruck steigt. Verschiedene chemische Reaktionen im Körper werden durch Nikotin zuerst angeregt, dann stark gehemmt. Eine Droge ganz besonderer Art also, die nicht nur sehr toxisch und gefährlich ist, sondern sehr bald zur Abhängigkeit und Sucht führt.

Wie andere bekannte Drogen treten auch bei Nikotinentwöhnungsversuchen sehr unangenehme Mangelerscheinungen auf, die meist rasch zum Abbruch des Versuches führen.

In EP-A- 0 202 512 wurde ein Mittel zur Abgabe nikotinhaltiger Dämpfe vorgeschlagen, das aus einem länglichen, für Luft durchgängigen Gehäuse und einem porösen Polymerstopfen zur Aufnahme und Abgabe von Nikotin besteht. Bein Einziehen der Luft durch das Gehäuse in der Art wie das Ziehen an einer Zigarette, erhalt der Verbraucher Nikotindampf in Mund und Lunge. Der Gebrauch eines solchen Mittels ist auffällig und wenig attraktiv, da die mühsam eingesogene Luft kalt ist.

Ein Vorschlag zur Blockierung der Nikotinrezeptoren durch Chemikalien führte nicht etwa zur Herabsetzung sondern im Gegenteil zur Erhöhung des Rauchbedürfnisses. Hingegen stellten Forscher eindeutig fest, dass das Bedürfnis nach einer Zigarette gedämmt werden kann durch orale Verabreichung geringer Dosen Nikotin. Damit konnten Entzugserscheinungen während einer Entwöhnungskur mit stetig abnehmenden Nikotinmengen vermieden werden. Zur praktischen Anwendung dieser Erkenntnis wurde in verschiedenen Ländern ein nikotinhaltiger Kaugummi auf den Markt gebracht. Obwohl das Kauen von Kaugummi vielerorts sehr beliebt ist, ist es nirgens "salonfähig". Es bestand daher der Wunsch nach einem nikotinabgebenden Mittel, das sich auch in Gesellschaft, während einer Verhandlung und dergleichen anstelle eines Tabakerzeugnisses anwenden lässt.

Aufgabe der vorliegenden Erfindung ist daher die Schaffung eines vom Material und der Form her ungefährlichen Gegenstandes, welches dem unbewussten Trieb des Verbrauchers, etwas zwischen Lippen und Zähnen zu fühlen, nachkommt, durch Berührung mit dem Speichel eine genau dosierbare Menge Nikotin abgibt, problemlos in einem Aschenbecher oder sonstigen Behälter deponiert oder weggeworfen werden kann und keinen gesellschaftlichen Anstoss erregt.

Diese Aufgabe wurde durch die in Patentanspruch 1 definierten Mittel gelöst, welche aus einem stabförmigen Träger aus physiologisch annehmbarem Material bestehen und Nikotin enthalten.

Das Nikotin kann in reiner Form oder in Form von Tabakextrakten oder Nikotinderivaten vorliegen. Da Nikotin wasserlöslich ist, wird es durch den Speichel aufgelöst und gelangt so in kleinen Mengen in den Körper.

Als Träger eignet sich grundsätzlich jeder stabförmige Träger aus physiologisch annehmbarem Material, der nicht gummielastisch ist und seine Form in feuchtem Zustand weitgehend beibehält, z.B. Zahnstocher, tabakfreie Zigarettennachahmungen mit Filtermundstück, Zigarettenhalter mit Filtereinlage, Holzdrahtabschnitte (kopflose Zündhölzer), flache Holzstäbchen, wie sie für Eisstengel verwendet werden, bleistiftähnliche Holzstäbe, Süssholzstengel, usw.

Der Einfachheit halber wird die Erfindung im folgenden anhand von Zahnstochern näher erläutert, doch sind den in Frage kommenden stabförmigen Trägern keine Grenzen gesetzt, solange sie mit Nikotin imprägniert oder anderweitig versehen werden können.

Durch das Reinigen der Zähne und auch das Kauen dieser nikotinhaltigen Zahnstocher wird das Nikotin durch den Speichel aus dem Zahnstocher freigesetzt und als Wirkstoff teils durch die Mundschleimhaut aufgenommen und teils aus dem verschluckten Speichel im Verdauungstrakt resorbiert, was zur Unterdrückung des Dranges zum Tabakrauchen oder zum Genuss des Tabaks führt.

Ueber die Toxikologie des Tabaks und Nikotins siehe in : Toxikologie von W. Wirth und Ch. Gloxhuber, 3. Auflage, Verlag G. Thieme, Stuttgart und New York, 1981. Aufgrund dieser Angabe ist es für den Fachmann unproblematisch, die geeignete Dosierung zu ermitteln, die genügt, den Drang zum Rauchen wirksam zu unterdrücken ohne gesundheitlich schädlich zu wirken.

Der Gebrauch eines nikotinhaltigen Zahnstochers ist unauffällig und kann auch während verschiedenster Tätigkeit ausgeführt werden, indem man einen solchen Zahnstocher in gewohnter Weise in den Mund einführt und die Zähne reinigt. Somit kann auf das unästhetische Kauen eines Produktes verzichtet werden, dessen Beseitigung nach dem Gebrauch problematisch sein kann, wie zum Beispiel des Kaugummis.

Bekanntlich bestehen die meisten im Handel befindlichen Zahnstocher aus Holz.

Die Absorption von Flüssigkeiten, somit auch des Nikotins, ist abhängig von der Art des zur Herstellung der Zahnstocher verwendeten Holzes.

So kann die Flüssigkeitsmenge eines aus hartem engporigem Holz hergestellten Zahnstochers weniger als 10 % seines Gewichtes betragen, z.B. einer 95 %igen alkoholischen Lösung. Andererseits nehmen weiche Hölzer Mengen auf, die mehr als 50 % ihres Gewichtes betragen.

Das Verhältnis ändert sich zudem mit der Polarität der Lösung und Zeitdauer des Kontaktes mit der Flüssigkeit. Beim Aufbringen einer genauen Dosis von Tabakextrakt oder von Nikotin muss dies in Rechnung gezogen werden. So kann die Imprägnation von Holz-Zahnstochern durch das Aufziehen einer alkoholischen Lösung von genau bestimmtem Anteil an Nikotin vorgenommen werden. Hierdurch ist eine sehr genaue Dosierung der Nikotinmenge pro Zahnstocher gewährleistet, die im allgemeinen 0,05 bis 10 mg Nikotin und insbesondere 0,5 bis 6 mg betragen sollte.

So sind Zahnstocher, die 1 mg Nikotin per Zahnstocher enthalten, als schwach bis normal anzusehen und solche mit einer Dosis von 2 bis 6 mg per Zahnstocher, als solche mit einer eher stärkeren Dosis anzusehen. Ein Raucher nikotinarmer Zigaretten wird Zahnstocher mit 1 bis 4 mg vorziehen, während ein Raucher starker Zigaretten vermehrt Zahnstocher mit grösseren Nikotinmengen verwenden dürfte. Mit fortschreitender Entwöhnung kann der Gehalt der Zahnstocher immer geringer gewählt werden.

Das Lösungsmittel, in dem das Nikotin oder der nikotinhaltige Tabakextrakt enthalten ist, kann nach dem Aufziehen in den Zahnstocher, z.B. Wasser, Alkohol, Essigester, Aether, Aceton, usw. sowie deren Gemische, durch Verdampfung im Luftstrom wieder aus dem hölzernen Zahnstocher entfernt werden, wobei das Nikotin oder der nikotinhaltige Tabakextrakt in den Holzporen zurückbleibt.

Andererseits können die Zahnstocherspitzen auch mit reinem Nikotin imprägniert werden, indem die bestimmte Dosis Nikotin aufgenommen wird.

Die aufgenommene Menge an Nikotin kann direkt gravimetrisch durch Wiegen oder durch Extraktion der imprägnierten Zahnstocher ermittelt werden. Analytisch kann Nikotin durch Gaschromatographie leicht nachgewiesen werden, ebenso auch durch Hochdruckflüssigchromatographie.

Nachträglich kann der nikotinhaltige Zahnstocher zusätzlich mit einem Ueberzug versehen werden, bestehend aus Gelatine, Zucker oder geeigneten Polysacchariden oder auch mit einer gewünschten Aromakomposition, wie z.B. Pfefferminz, Fruchtaromen, Lakrize, usw., oder mit anderen Hilfsstoffen, wie z.B. Blattgrün.

Eine andere Möglichkeit den Wirkstoff Nikotin auf Zahnstocher in einer gewünschten Dosis aufzubringen, besteht darin, dem Zahnstocher Rillen oder Lochbohrungen einzubringen und darin eine bestimmte Menge einer geeigneten Paste mit genauer Dosis des Nikotins einzutragen. Hierbei kann der Zahnstocher auch aus einem anderen Material als Holz bestehen, so z.B. aus üblichem Plastik, wie Zelluloid, Nylon, Polyamid, usw.

Bei der Benutzung des Zahnstochers nach dem Einführen in den Mund, nämlich durch das Stochern in den Zähnen, oder dem Daraufbeissen, Kauen und Saugen wird der Wirkstoff über einen Zeitraum, je nach Intensität der mechanischen Bearbeitung im Mund (in 1 bis 10 Minuten) freigesetzt.

Durch die sofortige Aufnahme des Nikotins durch die Mundschleimheut wird eine Verminderung oder Unterdrückung des Dranges zum Tabakgenuss durch Rauchen bewirkt. Durch diese Eigenschaft eignen sich nikotinenthaltende Zahnstocher oder andere Träger zur Abgewöhnung des Tabakrauchens.

### Beispiel 1

Zahnstocher aus weichem, saugfähigem Holz werden in eine alkoholische Nikotinlösung von 40 mg Nikotin in 1 g 95 %igem Aethanol, mit der Spitze voran, bis zur Hälfte ihrer Länge, für 20 Sekunden eingetaucht. Die Aufnahme der Lösung beträgt zwischen 45 bis 50 mg der Lösung, bestimmt durch Auswägen der einzelnen Zahnstocher vor und nach der Aufnahme. Hierbei werden maximal 2 mg Nikotin per Zahnstocher aufgenommen. Der Alkohol wird im Vakuum oder unter einer Infrarotlampe entfernt bis zur Gewichtskonstanz der Zahnstocher, so dass das Nikotin in dem porösen Holz verbleibt. Die so präparierten Zahnstocher sind geeignet zur Verminderung der Rauchlust, wie im vorangegangenen Teil beschrieben wurde.

### Beispiel 2

Beispiel 2 entspricht Beispiel 1, mit der Ausnahme, dass anstatt Nikotin eine entsprechende Menge eines Tabakextraktes mit 50 %igem Nikotingehalt verwendet wird.

### Beispiel 3

Zahnstocher aus saugfähigem Holz werden mit der Spitze voran soweit in einen Tabakextrakt mit genau bekanntem Nikotingehalt eingetaucht, dass sie die gewünschte Menge von Nikotin aufnehmen (1 bis 4 mg Nikotin per Zahnstocher). Bei der Zahnreinigung mittels so präparierter Zahnstocher bewirkt der nikotinhaltige Tabakextrakt eine Verminderung der Rauchlust und eignet sich dadurch zum Abgewöhnen des Tabakrauchens.

## Patentansprüche

1. Mittel zum Entwöhnen des Rauchens, Kauens oder Schnupfens von Tabak, dadurch gekennzeichnet, dass es aus einem stabförmigen Träger aus physiologisch annehmbarem Material, der dazu bestimmt ist, mit einem Ende dieser Träger mindestens an dem in den Mund einzuführenden Ende Nikotin enthält, welches in Berührung mit dem Speichel löslich ist.

2. Mittel nach Patentanspruch 1, dadurch gekennzeichnet, dass der Träger die Form eines Zahnstochers aufweist, aus saugfähigem Material besteht und mit einem nikotinhaltigen Tabakextrakt oder Nikotin getränkt ist.

3. Mittel nach Patentanspruch 1 oder 2, dadurch gekennzeichnet, dass es eine Nikotinmenge von 0,05 bis 10 mg pro Träger enthält.

4. Verfahren zur Herstellung eines Mittels nach einem der Patentansprüche 1 bis 3, dadurch gekennzeichnet, dass man einen stabförmigen Trager aus physiologisch annehmbarem Material mit einer nikotinhaltigen Lösung oder Paste in solcher Menge imprägniert, dass der Träger mit einer zur Unterdrückung des Dranges nach Rauchen wirksame Menge Nikotin versehen wird.

5. Verfahren nach Patentanspruch 4, dadurch gekennzeichnet, dass man pro Trager 0,05 bis 10 mg Nikotin aufbringt.

## Claims

1. A means to break the habit of smoking, chewing or sniffing tobacco, characterized in that it consists of a rod-shaped carrier from physiologically acceptable material, which is designated to be introduced with one end of said carrier into the mouth, that end at least containing nicotine, which is soluble on contact with the saliva.

2. A means according to claim 1, characterized in that the carrier has the shape of a toothpick, consisting of absorptive material which is soaked with nicotine-containing tobacco extract or nicotine.

3. A means according to claims 1 or 2, characterized in that the amount of nicotine is 0,05 to 10 mg per carrier.

4. A process for the manufacture of a means according to one of claims 1 to 3, characterized in that a rod-shaped carrier from physiologically acceptable material is impregnated with nicotine-containing solution or paste in such an amount that the carrier contains the effective amount of nicotine to suppress the desire for smoking.

5. A process according to claim 4, characterized in that 0,05 to 10 mg of nicotine per support is supplied.

## Revendications

1. Moyen à déshabituer de fumer, mâcher ou priser du tabac, caractérisé en ce qu'il consiste en un support sous forme de bâtonnet en matière physiologiquement acceptable, destiné à contenir, au moins au bout destiné à être introduit dans la bouche, de la nicotine se dissolvant en contact avec la salive.

2. Moyen selon la revendication 1, caractérisé en ce qu'il consiste en un support sous forme de cure-dent en matière absorbante et en ce qu'il est imbibé de nicotine ou d'un extrait de tabac contenant de la nicotine.

3. Moyen selon les revendications 1 ou 2, caractérisé en ce qu'il contient 0,05 à 10 mg de nicotine par support.

4. Procédé de fabrication d'un moyen selon les revendications 1 à 3, caractérisé en ce qu'on imprégne un support sous forme de bâtonnet en matière physiologiquement acceptable d'une solution ou d'une pâte de nicotine dans une quantité effective à supprimer le besoin de fumer.

5. Procédé selon la revendication 4, caractérisé en ce qu'on applique 0,05 à 10 mg de nicotine par support.
